Europäisches Patentamt

European Patent Office

Office européen des brevets

(11) Numéro de publication: **0 443 077 A1**

## (12) DEMANDE DE BREVET EUROPEEN

(21) Numéro de dépôt: 90110538.7

(22) Date de dépôt: 02.06.90

(51) Int. Cl.⁵: **B01D 35/20, B07B 1/28**

(30) Priorité: 17.02.89 FR 8902457

(43) Date de publication de la demande:
28.08.91 Bulletin 91/35

(84) Etats contractants désignés:
AT BE CH DE DK ES GB GR IT LI LU NL SE

(71) Demandeur: **Bringuier, Gérald**
**Route de Tarbes, Lee**
**F-64320 Bizanos(FR)**

(72) Inventeur: **Bringuier, Gérald**
**Route de Tarbes, Lee**
**F-64320 Bizanos(FR)**

(74) Mandataire: **Schlawick, Yvan**
**8, rue Théophile Gautier**
**F-65000 Tarbes(FR)**

(54) **Tamis vibrant à effets variables.**

(57) Dispositif permettant de séparer des particules de très faible granulométrie en suspension dans un fluide, du fluide lui-même, ou de tous produits pulvérulents ou en grains, par vibrations d'amplitudes réglables.

Il comprend un caisson de collecte du produit traité (1) incorporant un panier de réception vibrant (3) dont le fond est équipé de un ou plusieurs tamis (4). Un moteur orientable (6) fixé sur un axe réglable (7), associé à deux supports déplaçables (8), assu-rent les variations en amplitude des vibrations. Des bras de réglage (10) articulés sur le caisson de collecte (1), associés à une vis (11), offre la possibi-lité de varier l'angle de travail de la machine en positif ou en négatif. Des silentblocs (9) associés au panier de réception (3) assurent l'homogénéité de l'ensemble.

L'invention peut être utilisée pour le traitement de tout fluide et produit chargés quelle que soit leur provenance.

FIG .1

## TAMIS VIBRANT A EFFETS VARIABLES

La présente invention concerne les appareils de type vibratoire, permettant le traitement des fluides chargés de particules, par tamisage, ou de toute autre matière pulvérulente ou en grains.

Dans les dispositifs connus de ce genre, les tamis vibrants se présentent en pente positive uniquement. Un tel dispositif offre un nombre d'utilisations limitées à certains types de fluides. Sur les appareils classiques, la fixité de l'inclinaison des tamis ne permet aucun contrôle de la vitesse d'évacuation des particules. De ce fait, elles ne sont que partiellement et qu'imparfaitement séchées, s'évacuant trop rapidement vers la sortie.

Le dispositif objet de l'invention permet d'éviter l'ensemble de ces inconvénients. Cet appareil présente l'avantage de traiter la totalité des fluides ou de toute matière pulvérulente ou en grains, et de faire acheminer les produits issus du traitement, sur les tamis à la vitesse désirée, par le réglage de l'angle du ou des tamis, en pente positive ou négative et par une vibration oblique modulable. Cette vibration permettant d'accélérer la séparation verticale au travers des tamis et d'acheminer les particules lourdes vers la sortie de l'appareil.

Le dispositif objet de l'invention comporte des bras de réglage d'angle en pente positive ou négative, articulés sur le caisson de collecte des fluides ou des matières, pouvant s'évacuer par une trappe.

Un mécanisme de réglage, comprenant une vis et un ensemble gradué, garantit une variation d'amplitude des bras de +2 à -5°, ou plus ou moins selon les cas, laissant la possibilité aux particules de défiler sur le tamis à la vitesse voulue.

Un dispositif d'air comprimé et pulsé, soufflé sous le tamis par l'intermédiaire d'un râteau guide, assure son décolmatage, ainsi que le séchage des particules.

Ce système s'associe à un panier de réception, comprenant un support moteur réglable par déplacement des points de fixation sur un axe réglable, incorporant un moteur orientable, apportant une vibration oblique modulable, suivant sa propre position réglable sur arbre support, et la position de ses masselottes.

Quatre silentblocs possédant des tétons de maintien s'incorporant aux bras reposent sur ces mêmes bras articulés et font corps avec le panier vibrant garantissant ainsi l'homogénéité de l'ensemble.

Le ou les tamis supportés au moyen d'un caillebotis en polyester armé autograissant peuvent recevoir un réglage extérieur de leur tension grâce à un système de tendeurs mécaniques.

Ces réalisations rendent l'appareil opérationnel pour traiter tous types de produits, contenant des particules de granulomètrie supérieure à 20 microns, avec des capacités de 100m3/h et 200m3/h ou plus ou moins. De plus, ce dispositif comporte un système de mise en place ou de changement des tamis ne nécessitant aucun outil ; un changement de tamis demandant une minute. Ces appareils sont réalisés en acier de construction courante, ou en acier inoxydable, ou en tout autre matériau de caractéristique équivalente.

Les dessins annexés illustrent, à titre d'exemple, un mode de réalisation du dispositif conforme à la présente invention.

Tel qu'il est représenté, le dispositif comporte:

La figure 1 qui représente une vue longitudinale du dispositif.

La figure 2 qui représente une coupe finie de l'appareil.

La figure 3 comprend un caisson de collecte 1 muni d'une trappe d'évacuation 2 incorporant un panier de réception vibrant 3 dont le fond est équipé d'un ou plusieurs tamis 4 de maillage variable, supportés par un caillebotis en polyester armé autolubrifiant 5. Un moteur orientable 6 dont le réglage angulaire est assuré par un axe 7, associé à deux supports mobiles 8, déplaçable par boulons placés au-dessus des montants du panier et réglant la répartition des charges sur les silentblocs 9, assure les variations en amplitude des vibrations. Des bras de réglage 10 en association avec une vis et un ensemble de réglage gradué 12, s'articulent en 13 sur le caisson de collecte 1, offrant la possibilité de faire varier l'angle de travail de la machine en positif ou en négatif. Quatre silentblocs 9 faisant bloc avec le panier vibrant 3 font reposer ce dernier sur les bras de réglage 10 munis d'une articulation 13. Des tendeurs mécaniques 14 avec bras 15 et vis 16 donnent au tamis la raideur désirée.

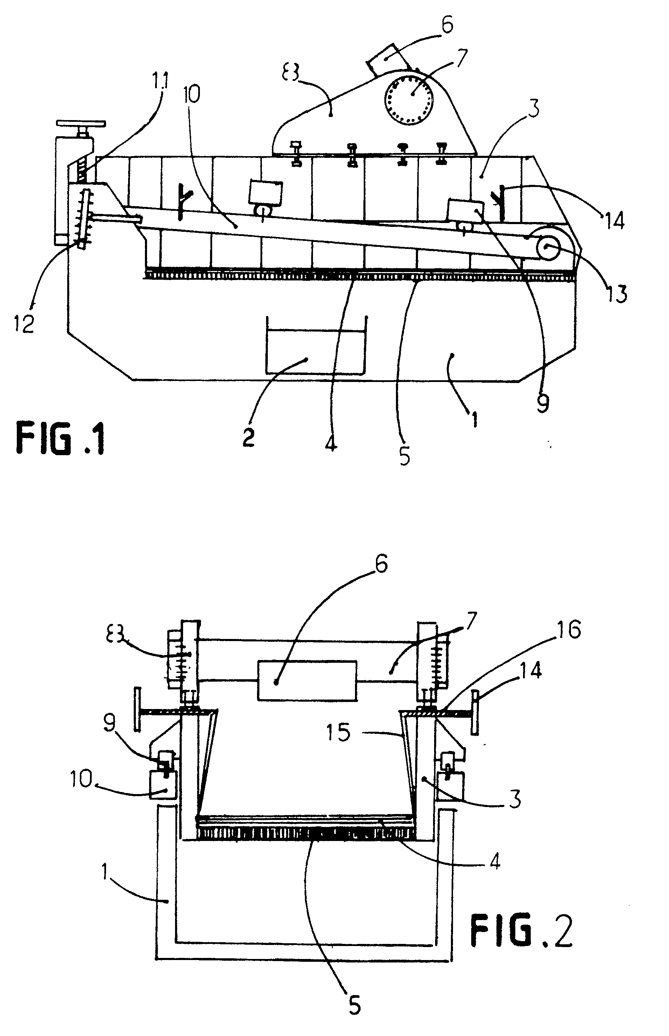

La figure 2 représente un caisson de collecte 1 incorporant un panier de réception vibrant 3 dont le fond comporte un ou plusieurs tamis 4 de maillage variable, supporté par un caillebotis en polyester armé autolubrifiant 5. Un moteur orientable 6 dont le réglage angulaire est assuré par un axe réglable 7, associé à un support mobile 8 déplaçable sur des boulons placés au-dessus des montants du panier, et réglant la répartition des charges sur les silentblocs 9, assure les variations en amplitude des vibrations. Des bras de réglage 10 s'articulent sur le caisson de collecte 1, offrant la possibilité de faire varier l'angle de travail de la machine en positif ou en négatif.

Quatre silentblocs 9 faisant corps avec le panier vibrant 3 font reposer ce dernier sur les bras de réglage articulés 10. Des tendeurs mécaniques 14 avec bras 15 et vis 16 donnent au tamis la raideur désirée.

Le dispositif, objet de l'invention, peut être utilisé pour le traitement de tous les fluides chargés, qu'ils soient de provenance chimique, agroalimentaire, pétrolière, stations d'épuration, etc ...

**Revendications**

1. Dispositif permettant la séparation des particules en suspension dans un fluide, du fluide lui-même ou de tout autre produit pulvérulent ou en grains, comportant un caisson de collecte (1) articulé par des bras (10) et muni d'une trappe d'évacuation (2) incorporant un panier de réception (3) dont le fond est équipé de un ou plusieurs tamis (4) ; caractérisé par le fait que les variations obliques d'amplitudes réglables sont produites par l'orientation d'un moteur (6) réglable par déplacement des points de fixation autour d'un axe réglable (7), associé à deux supports (8) déplaçables sur un panier de réception (3) vibrant posé sur quatre silentblocs (9), tamis muni d'un caillebtis (5) avec système anti-colmatage.

2. Dispositif selon la revendication 1, caractérisé par le fait que les bras (10) associés à une vis (11) et à un ensemble gradué (12), sont articulés sur un caisson de collecte (1), lui permettant de travailler en pente mobile inversée, positive ou négative.

3. Dispositif selon la revendication 1, caractérisé en ce que le panier (3) est posé sur les silentblocs (9) possédant des tétons de maintien s'incorporant aux bras (10), et maintenant l'ensemble grâce à son propre poids.

4. Dispositif selon la revendication 1, caractérisé par le fait qu'un dispositif d'air comprimé et pulsé, soufflé sous le tamis (4) par l'intermédiaire d'un râteau guide, évite le colmatage du ou des tamis (4).

5. Dispositif selon la revendication 1, caractérisé en ce que l'orientation du moteur (6) est déplaçable sur l'axe de réglage angulaire (7), dont les points de fixation sont situés tout autour de l'axe.

6. Dispositif selon la revendication 1, caractérisé par le fait que le caillebotis (5) est en polyester armé autolubrifiant.

FIG .1

FIG .2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | OIL<br>& GAS JOURNAL, vol. 80, no. 1, 4 janvier 1982, pages 89-99, Tulsa, Okl., US; L.L. HOBEROCK: "Curves are useful guide in finding fluid capacity limits for conventional shaker screens"<br>* Page 89, colonnes 1-2; figure 1 *<br>— — — | 1-5 | B 01 D 35/20<br>B 07 B 1/28 |
| Y | CH-A-2 547 13   (GESELLSCHAFT DER LUDW. VON ROLL'SCHEN EISENWERKE)<br>* Page 1, ligne 65 - page 2, ligne 5; revendication 4; figure 1 *<br>— — — | 1,4 | |
| Y | US-A-2 247 271   (A. BARLOW)<br>* Page 1, colonne de droite, lignes 7-15; figure 2 * | 1 | |
| A | | 6 | |
| | — — — | | |
| Y | DE-B-1 036 781   (RHEWUM GmbH)<br>* Colonne 3, lignes 19-26; revendication 4; figures *<br>— — — | 1,2 | |
| Y | FR-A-1 474 196   (CAVIEM)<br>* Page 2, colonne de gauche, lignes 33-41; page 2, colonne de droite, lignes 39-51; figure 1 * | 1,2 | |
| A | | 4 | **DOMAINES TECHNIQUES RECHERCHES (Int. Cl.5)** |
| | — — — | | B 01 D |
| A | GB-A-2 185 698   (THULE UNITED LTD)<br>* Résumé; page 1, lignes 29-40 *<br>— — — — — | 6 | B 07 B |

Le présent rapport de recherche a été établi pour toutes les revendications

| Lieu de la recherche | Date d'achèvement de la recherche | Examinateur |
|---|---|---|
| La Haye | 06 février 91 | MARZENKE J. |